# EUROPÄISCHE PATENTSCHRIFT

(11) **EP 3 481 666 B1**
(45) Veröffentlichungstag und Bekanntmachung des Hinweises auf die Patenterteilung: **07.05.2025**
(21) Anmeldenummer: 17761460.9
(22) Anmeldetag: 25.08.2017
(51) Int. Cl.: B60M 5/00

(54) **FAHRLEITUNGSANLAGE**
CATENARY LINE DEVICE
DISPOSITIF DE LIGNE CATENAIRE

(30) Priorität: 02.09.2016 DE 102016216671
(43) Veröffentlichungstag der Anmeldung: 15.05.2019
(73) Patentinhaber: Siemens Mobility GmbH, 81739 München (DE)
(72) Erfinder: BRAUN, Wolfgang, 96191 Viereth-Trunstadt (DE); KOCH, Thomas, 14656 Brieselang (DE); ALTMANN, Martin, 91054 Erlangen (DE); SCHMIEDER, Axel, 04288 Leipzig (DE)
(74) Vertreter: Siemens Patent Attorneys
(86) Internationale Anmeldenummer: PCT/EP2017/071421
(87) Internationale Veröffentlichungsnummer: WO 2018/041733

(56) Entgegenhaltungen:
- EP-A2- 0 893 299
- FR-A1- 2 282 177
- JP-A- 2004 291 712
- STEINFELD K ET AL: "METALLOXIDABLEITER FUER ELEKTRISCHE BAHNEN // META OXIDE SURGE ARRESTERS FOR ELECTRICAL EQUIPMENT OF RAILWAYS // DEVIATEUR DE COURANT EN OXYDE METALLIQUE POUR CHEMINS DE FER ELECTRIFIES", EB- ELEKTRISCHE BAHNEN, DIV-DEUTSCHER INDUSTRIEVERLAG, DE, vol. 100, no. 8/09, 1 August 2002 (2002-08-01), pages 321 - 328, XP001125534, ISSN: 0013-5437

## Beschreibung

Die Erfindung betrifft eine Fahrleitungsanlage, mit wenigstens einer Fahrleitung zur Energieversorgung wenigstens eines Fahrzeugs, mit wenigstens einem umbauten Bereich, in dem eine von einer maximal zu erwartenden Überspannung abhängige Schlagweite zu einem Bauwerk einzuhalten ist, und mit wenigstens einer Ableiteinrichtung, die einerseits mit der Fahrleitung und andererseits mit einem Erdpotential verbunden ist.

Fahrleitungsanlagen der genannten Art sind aus dem Stand der Technik bekannt und werden für die Stromversorgung von schienengebundenen Fahrzeugen oder auch nicht schienengebundenen Fahrzeugen, wie E-Trucks oder Elektrobussen, eingesetzt. Die Fahrleitungsanlage kann dabei als Fahrleitung eine Oberleitung, eine Stromschiene, eine dritte Schiene oder ähnliches aufweisen, die fahrzeugseitig jeweils mit einem Stromabnehmer kontaktiert wird. Während der Fahrt des Fahrzeugs besteht ein Schleifkontakt des Stromabnehmers zur Fahrleitung, über den die Energie übertragen wird.

Ableiteinrichtungen, wie beispielsweise Überspannungsableiter, können zum Schutz der Fahrleitungsanlage gegen Überspannungen eingesetzt werden. Eine solche Verwendung ist beispielsweise in der JP 2004291712 A beschrieben.

In der FR 2 282 177 A1 ist ebenfalls eine Ableiteinrichtung einer Fahrleitungsanlage beschrieben, die mit einer Fahrleitung und einem Erdpotential verbunden ist und die Fahrleitungsanlage einen umbauten Bereich hat, in dem eine, von einer maximal zu erwartenden Überspannung abhängige Schlagweite zu einem Bauwerk einzuhalten ist.

Es ist weiterhin bekannt, dass Metalloxidableiter zum Schutz von Gleichspannungsbahnen vor Überspannungen bei Blitzeinschlägen eingesetzt werden, wie dies beispielsweise in der EB- ELEKTRISCHE BAHNEN, DIV-DEUTSCHER INDUSTRIEVERLAG, DE, Bd. 100, Nr. 8/09, 1. August 2002 (2002-08-01), Seiten 321-328, XP001125534, ISSN: 0013-5437 beschrieben ist.

Umbaute Bereiche der Fahrleitungsanlage sind Bereiche, in denen ein Bauwerk oder ein Teil des Bauwerks in der Nähe der Fahrleitung angeordnet ist und dadurch die Gefahr eines elektrischen Überschlags von der Fahrleitung auf das Bauwerk besteht. Solche Bauwerke können beispielsweise Tunnel, Brücken oder auch Bahnhofsgebäude mit Dächern oder ähnliches sein. Diese Bauwerke führen häufig über die zu elektrifizierende Bahnstrecke oder führen diese durch sich hindurch. Um den elektrischen Überschlag zu den Gebäudeteilen zu verhindern, ist die sogenannte elektrische Schlagweite einzuhalten. Die Schlagweite ist ein Abstand zwischen zwei Leitern - hier der spannungführenden Fahrleitung und dem Bauwerk - bei dessen Unterschreitung bei gegebener Spannung ein Überschlag stattfinden kann. Die Schlagweite ist proportional zu der maximal zu erwartenden Überspannung in der Fahrleitung. Der für die ausreichende Schlagweite nötige Abstand ist in Normen festgeschrieben. Bei einem Unterschreiten der notwendigen Schlagweite kann keine verkehrstechnische Zulassung der elektrifizierten Bahnstrecke und der Fahrleitungsanlage erfolgen. Daher sollten die nötigen Abstände bei der Neukonstruktion einer Fahrleitungsanlage und Bahnstrecke frühzeitig bei der Planung der Fahrleitungsanlage und der Bauwerke berücksichtigt werden. Die Einhaltung dieser Mindestabstände kann die Kosten für den Bau oder auch Umbau der Gebäude beträchtlich erhöhen. Ggf. müssen beispielsweise Tunnel entsprechend groß gearbeitet und Brücken entsprechend hoch gebaut werden, um die nötige Schlagweite einzuhalten.

Es ist daher die Aufgabe der vorliegenden Erfindung, eine Fahrleitungsanlage der eingangs genannten Art bereitzustellen, bei der die genormte Schlagweite reduziert ist.

Diese Aufgabe wird erfindungsgemäß durch die Merkmale des unabhängigen Patentanspruchs 1 gelöst.

Die erfindungsgemäße Lösung hat den Vorteil, dass die maximal zu erwartende Überspannung in dem, durch die Ableiteinrichtungen ausgebildeten, geschützten Abschnitt der Fahrleitung auf eine Restspannung der Ableiteinrichtungen, dem sogenannten Schutzpegel, begrenzt und dadurch reduziert ist. Die Ableiteinrichtung ist beispielsweise ein Überspannungsableiter, durch den beispielsweise bei einem Blitzeinschlag in die Fahrleitung die maximal zu erwartende Überspannung reduziert ist. Durch die verringerte maximal zu erwartende Überspannung in dem geschützten Abschnitt der Fahrleitung ist dort die Schlagweite entsprechend reduziert, ohne dass eine Gefahr für Mensch oder Bauwerk besteht.

Durch die Erfindung ist es möglich, eine zu bauende Fahrleitungsanlage und die Bauwerke im umbauten Bereich zu vereinfachen, da der betroffene Bereich für geringere Schlagweiten auszulegen ist, oder bei bestehenden umbauten Bereichen den Betrieb durch die geringeren Schlagweiten überhaupt zu ermöglichen. Unter Umständen kann die erfindungsgemäße Lösung nämlich bei bestimmten Bauwerken eine Fahrleitungsanlage überhaupt erst möglich machen.

In einer vorteilhaften Ausgestaltung der Erfindung kann die Ableiteinrichtung so ausgebildet sein, dass dessen Schutzpegel kleiner als eine Bemessungs-Stoßspannung und größer als die zulässigen Grenzen einer Nennspannung der Fahrleitungsanlage ist. Die Bemessungs-Stoßspannung der Fahrleitungsanlage ist durch die Ausbildung der Fahrleitungsanlage vorgegeben und ist die Spannung, auf die theoretisch für den Fall eines Blitzschlags durch die Isolation begrenzt wird. Man spricht von einer sogenannten systemeigenen Begrenzung, die beispielsweise in einem 25 kV System typischerweise 200 bis 250 kV ist. Die Nennspannung der Fahrleitungsanlage beträgt beispielsweise 25 KV, wobei dauernd beispielsweise 27,5 kV und kurzzeitig beispielsweise sogar bis zu 38,75 kV für 20 ms zugelassen werden.

Um die Ableiteinrichtung bei einem Kurzschluss der Ableiteinrichtung selbst abtrennen zu können, kann die Fahrleitungsanlage wenigstens eine zwischen Ableiteinrichtung und Erdpotential angeordnete Trennvorrichtung aufweisen, durch die die Ableiteinrichtung vom Erdpotential elektrisch trennbar ausgebildet ist. Weiterhin kann die Trennvorrichtung zum automatischen Trennen der Ableiteinrichtung vom Erdpotential nach einer vorbestimmten Kurzschlussdauer ausgebildet sein. Dies hat den Vorteil, dass das Abtrennen der Ableiteinrichtung durch die Trennvorrichtung automatisch geschieht und kein manueller Eingriff eines Bedieners notwendig ist. So kann die Einsatzbereitschaft einer durch Kurzschluss einer Ableitungseinrichtung ausgefallenen Fahrleitungsanlage schneller wieder hergestellt werden.

Um einen elektrischen Überschlag bei abgetrennter Ableiteinrichtung auszuschließen, kann die Fahrleitungsanlage wenigstens eine zwischen Ableiteinrichtung und Erdpotential angeordnete und die Ableiteinrichtung isolierende Isoliereinrichtung aufweisen.

Erfindungsgemäß ist vor und hinter dem umbauten Bereich jeweils wenigstens eine Ableiteinrichtung angeordnet. Durch diese redundante Ausführung kann auch bei einem Ausfall einer der beiden Ableiteinrichtungen ein Überschlag im umbauten Bereich sicher ausgeschlossen werden.

Um eine Spannungserhöhung durch Reflektion im umbauten Bereich zu verhindern, ist die Fahrleitung im Bereich zwischen den Ableiteinrichtungen erfindungsgemäß mit einem im Wesentlichen konstanten Wellenwiderstand ausgebildet.

Im Folgenden wird die Erfindung mit Bezug auf die beigefügten Zeichnungen und der darin dargestellten beispielhaften Ausführungsform der Erfindung beschrieben.

Es zeigen:
- Figur 1: eine schematische Darstellung einer beispielhaften Ausführungsform der erfindungsgemäßen Fahrleitungsanlage;
- Figur 2: eine schematische Darstellung der Ableiteinrichtung samt Isolatoreinrichtung und Trennvorrichtung als Detail der Fahrleitungsanlage aus Figur 1.

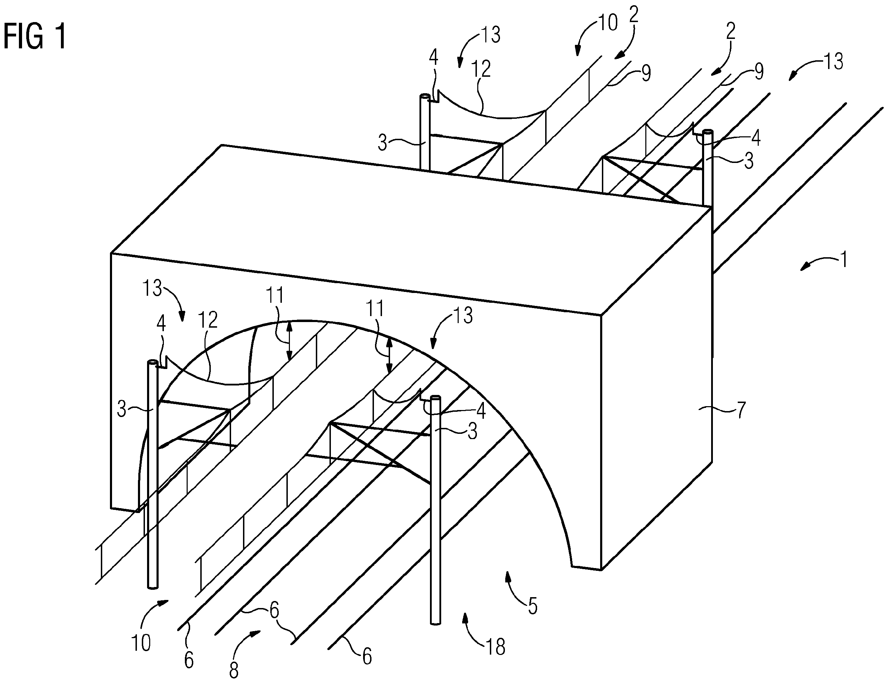

Figur 1 zeigt eine beispielhafte Ausführungsform einer Fahrleitungsanlage 1, die Fahrleitungen 2, Masten 3, Ableiteinrichtungen 4 und einen umbauten Bereich 5 aufweist.

Die Fahrleitungsanlage 1 ist entlang einer durch Gleise 6 ausgebildeten Eisenbahnstrecke angeordnet. In dem in Figur 1 dargestellten Bereich führen die Gleise 6 teilweise unter einer Brücke 7 hindurch. Durch die Fahrleitungsanlage 1 ist die Eisenbahnstrecke 8 elektrifiziert, um sich auf den Gleisen 6 bewegende Fahrzeuge (nicht dargestellt) mit elektrischer Energie zu versorgen.

Die Fahrleitungen 2 werden durch die Masten 3 gehalten und weisen jeweils einen Fahrdraht 9 und ein den Fahrdraht 9 in bekannter Weise haltendes Kettenwerk 10 auf. Die Fahrleitungen 2 sind in an sich bekannter Weise so angeordnet, dass ein auf den Gleisen 6 fahrendes Schienenfahrzeug (nicht dargestellt) den Fahrdraht 9 über einen Stromabnehmer kontaktieren kann und während der Fahrt über einen Schleifkontakt mit elektrischer Energie versorgt wird.

Selbstverständlich kann die erfindungsgemäße Fahrleitungsanlage 1 auch Fahrleitungen 2 in Form von Stromschienen oder dritten Schienen als Alternative, zu der in Figur 1 dargestellten Oberleitung aufweisen.

Der umbaute Bereich 5 ist der Bereich der Fahrleitungsanlage 1, der von der Brücke 7 überdeckt ist und in dem eine nötige Schlagweite zur Brücke 7 eingehalten werden muss, um Überschläge auf die Brücke 7 zu verhindern. Die Schlagweite ist die Entfernung zwischen zwei Leitern, bei deren Unterschreitung bei gegebener Spannung zwischen ihnen ein Überschlag - also eine Funkenentladung - stattfinden kann. Um einen solchen Überschlag zu verhindern, weist die Fahrleitung 2 einen Abstand 11 zur Brücke 7 auf, der größer oder gleich der Schlagweite ist.

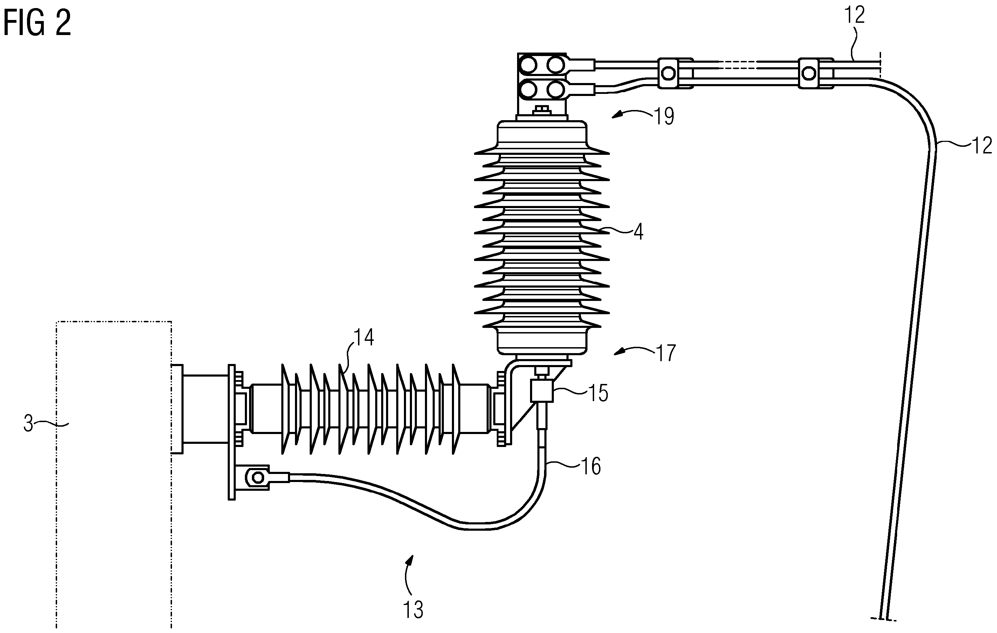

Die Fahrleitungsanlage 1 weist vor und hinter dem umbauten Bereich 5 jeweils eine Ableiteinrichtung 4 auf, die jeweils über eine Verbindungsleitung 12 mit der Fahrleitung 2 verbunden sind. Die Ableiteinrichtungen 4 sind Teil von Ableitanordnungen 13, die als Details von Figur 1 in Figur 2 dargestellt sind. Die Ableitanordnung 13 ist zwischen dem Mast 3 und der Fahrleitung 2 angeordnet und umfasst die Verbindungsleitung 12, die Ableiteinrichtung 4, eine Isolatoreinrichtung 14, eine Trennvorrichtung 15 und eine Erdungsleitung 16.

Die Verbindungsleitung 12 bildet eine elektrische Verbindung zwischen der Fahrleitung 2 und dem einen Ende 19 der Ableiteinrichtung 4. Das andere Ende 17 der senkrecht angeordneten Ableiteinrichtung 4 ist mit der Trennvorrichtung 15 verbunden. Ansonsten ist dieses andere Ende 17 der Ableiteinrichtung 4 einerseits durch die waagerecht angeordnete Isolatoreinrichtung 14 von dem ein Erdpotential darstellenden Mast 3 isoliert. Andererseits ist am anderen Ende 17 der Ableiteinrichtung 4 die Trennvorrichtung 15 vorgesehen. Gegenüberliegend von der Ableiteinrichtung 4 ist die Trennvorrichtung 15 mit der Erdungsleitung 16 verbunden, die die Trennvorrichtung 15 mit dem Erdpotential des Mastes 3 verbindet. Das Erdpotential kann über eine beliebige Erdungsanlage hergestellt werden. Der Mast 3 ist ein Beispiel für eine Erdungsanlage. Die nicht aktivierte Trennvorrichtung 15 und die Erdungsleitung 16 überbrücken die Isolationseinrichtung 14.

Die Ableiteinrichtung 4 ist ein Überspannungsableiter, der eine in der Fahrleitung 2 auftretende Überspannung bis zu seiner Restspannung ableitet. Eine in der Fahrleitung 2 auftretende Überspannung, beispielsweise durch einen Blitzeinschlag, wird über die Verbindungsleitung 12 in die Ableiteinrichtung 4 geführt, die diese über die Trennvorrichtung 15 und die Erdungsleitung 16 über den Mast 3 ableitet. Dadurch reduziert sich die im umbauten Bereich 5 mögliche maximale Überspannung auf die Restspannung der Ableiteinrichtung 4. Diese Restspannung beträgt bei der in den Figuren 1 und 2 dargestellten beispielhaften Ableiteinrichtung 4 beispielsweise U_{10kA} - _{8/20us} = 75 kV.

Durch die Ableiteinrichtungen 4 wird ein geschützter Abschnitt 18 der Fahrleitung 2 ausgebildet, in dem die zu erwartende maximale Überspannung gegenüber einem Bereich ohne Ableiteinrichtung 4 reduziert ist. Der geschützte Abschnitt 18 deckt den umbauten Bereich 5 erfindungsgemäß vollständig ab. Die maximale zu erwartende Überspannung in der Fahrleitung 2 vergrößert sich mit der Entfernung zu der Ableiteinrichtung 4. Im umbauten Bereich 5 zwischen den Ableiteinrichtungen 4 ist die Fahrleitung 2 in der dargestellten Ausführung mit einem im Wesentlichen konstanten Wellenwiderstand ausgebildet. Dadurch können in der Fahrleitung im umbauten Bereich 5 keine Reflektionen auftreten, die zu einer Spannungserhöhung führen würden. Der konstante Wellenwiderstand zwischen den Ableiteinrichtungen 4 wird erreicht, da in diesem Bereich die Fahrleitung 2 keine elektrischen Anschlüsse oder ähnliches aufweist. Durch den konstanten Wellenwiderstand kann von einer konstanten maximal zu erwartenden Überspannung zwischen den Ableiteinrichtungen 4 im umbauten Bereich 5 ausgegangen werden. Diese Spannung oder Überspannung entspricht im Wesentlichen dem Schutzpegel der Ableiteinrichtung 4.

Falls ein Defekt bei einer der Ableiteinrichtungen 4 auftritt und einen Kurzschluss der Fahrleitung 2 mit dem Mast/Erdungsanlage verursacht, trennt die Trennvorrichtung 15 die Verbindung zwischen der Ableiteinrichtung 4 und der Erdungsleitung 16 automatisch ab. Dies geschieht beispielsweise nach einer vorgegebenen Zeit, nach der somit der durch den Defekt bedingte Kurzschluss der Fahrleitung 2 beendet ist. Da die Fahrleitungsanlage 1 im Fall eines Kurzschlusses nicht betrieben werden kann, ist die automatische Trennung besonders vorteilhaft und erlaubt eine schnellen Wiederinbetriebnahme der erfindungsgemäßen Fahrleitungsanlage 1.

Da die erfindungsgemäße Fahrleitungsanlage 1 mit Ableiteinrichtungen 4 vor und hinter dem umbauten Bereich 5 ausgestattet ist, ist auch bei einem Ausfall einer der beiden Ableiteinrichtungen 4 die reduzierte Schlagweite im umbauten Bereich 5 durch die zweite Ableiteinrichtung 4 gewährleistet. So ist ein redundantes System geschaffen, das die Sicherheit erhöht.

Die Ableiteinrichtungen 4 sind jeweils mit einem niedrigen Schutzpegel bezogen auf die Bemessungs-Stoßspannung (auch Bemessungs-Blitzstoßspannung genannt) und einem hohen Energievermögen ausgebildet.

Durch die erfindungsgemäße Fahrleitungsanlage 1 im umbauten Bereich kann der Abstand 11 zu der Brücke 7 gegenüber dem Stand der Technik reduziert werden, was die Baukosten der Brücke 7 reduziert oder die Fahrleitungsanlage 1 im Bereich einer bereits bestehenden Brücke 7 überhaupt ermöglicht bzw. vereinfacht.

## Patentansprüche

1. Fahrleitungsanlage (1) einer Bahnstrecke (8),
mit wenigstens einer Fahrleitung (2) zur Energieversorgung wenigstens eines Fahrzeugs, mit wenigstens einem Bauwerk, mit wenigstens einem umbauten Bereich (5), in dem eine, von einer maximal zu erwartenden Überspannung abhängige elektrische Schlagweite zu dem wenigstens einen Bauwerk, durch welches die Fahrleitung (2) und die Bahnstrecke (8) hindurchführen, einzuhalten ist, und
mit wenigstens zwei Ableiteinrichtungen (4), die einerseits mit der wenigstens einen Fahrleitung (2) der Fahrleitungsanlage (1) und andererseits mit einem Erdpotential verbunden sind,
**dadurch gekennzeichnet, dass**
die wenigstens zwei Ableiteinrichtungen (4) relativ zu dem wenigstens einen umbauten Bereich (5) des wenigstens einen Bauwerks so angeordnet sind, dass ein, durch die wenigstens zwei Ableiteinrichtungen (4) ausgebildeter, geschützter Abschnitt (18) der wenigstens einen Fahrleitung (2) den umbauten Bereich (5) abdeckt, wobei die wenigstens zwei Ableiteinrichtungen (4) die, in dem wenigstens einen umbauten Bereich (5) des wenigstens einen Bauwerks maximal zu erwartende Überspannung und die, von der maximal zu erwartenden Überspannung abhängige, zu dem wenigstens einen Bauwerk einzuhaltende elektrische Schlagweite im geschützten Abschnitt (18) auf eine elektrische Schlagweite unter der, ohne die wenigstens zwei Ableiteinrichtungen (4) zu dem wenigstens einen Bauwerk einzuhaltenden elektrischen Schlagweite reduziert, wobei vor und hinter dem wenigstens einen umbauten Bereich (5) jeweils eine der wenigstens zwei Ableiteinrichtungen (4) angeordnet ist und wobei die wenigstens eine Fahrleitung (2) der Fahrleitungsanlage (1) im Bereich zwischen den Ableiteinrichtungen (4) so ausgebildet ist, dass der Wellenwiderstand im Wesentlichen konstant ist.

2. Fahrleitungsanlage (1) nach Anspruch **1,**
**dadurch gekennzeichnet, dass**
die Ableiteinrichtung (4) so ausgebildet ist, dass dessen Schutzpegel kleiner als eine Bemessungs-Stoßspannung und größer als die zulässigen Grenzen einer Nennspannung der Fahrleitungsanlage (1) ist.

3. Fahrleitungsanlage (1) nach Anspruch 1 oder **2,**
**dadurch gekennzeichnet , dass**
die Fahrleitungsanlage (1) wenigstens eine zwischen Ableiteinrichtung und Erdpotential angeordnete Trennvorrichtung (15) aufweist, durch die die Ableiteinrichtung (4) vom Erdpotential elektrisch trennbar ausgebildet ist.

4. Fahrleitungsanlage (1) nach Anspruch 3,
**dadurch gekennzeichnet, dass**
die Trennvorrichtung (15) zum automatischen Trennen der Ableiteinrichtung (4) vom Erdpotential nach einer vorbestimmten Kurzschlussdauer ausgebildet ist.

5. Fahrleitungsanlage (1) nach einem der oben genannten Ansprüche,
**dadurch gekennzeichnet, dass**
die Fahrleitungsanlage (1) wenigstens eine zwischen Ableiteinrichtung (4) und Erdpotential angeordnete und die Ableiteinrichtung (4) isolierende Isolatoreinrichtung (14) aufweist.

## Claims

1. Contact line system (1) of a railway line (8),
having at least one contact line (2) for supplying power to at least one vehicle, having at least one structure,
having at least one covered region (5) in which an electrical clearance, dependent on a maximum expected overvoltage, from the at least one structure, through which the contact line (2) and the railway line (8) pass, is to be observed, and
having at least two discharging devices (4) that are connected on the one hand to the at least one contact line (2) of the contact line system (1) and on the other to ground potential,
**characterised in that**
the at least two discharging devices (4) are arranged in relation to the at least one covered region (5) of the at least one structure such that a protected section (18) of the at least one contact line (2), which is formed by the at least two discharging devices (4), covers the covered region (5), wherein the at least two discharging devices (4) the maximum expected overvoltage in the at least one covered region (5) of the at least one structure and the electrical clearance, dependent on the maximum expected overvoltage and to be observed from the at least one structure reduces in the protected section (18) to an electrical clearance below the electrical clearance to be observed from the at least one structure without the at least two discharging devices (4), wherein one of the at least two discharging devices (4) is arranged upstream and downstream of the at least one covered region (5) in each case, and wherein the at least one contact line (2) of the contact line system (1) is formed in the region between the discharging devices (4) so that the impedance level is essentially constant.

2. Contact line system (1) according to claim 1,
**characterised in that**
the discharging device (4) takes a form such that its protective level is less than an impulse voltage withstand level and greater than the permitted limits of a rated voltage of the contact line system (1).

3. Contact line system (1) according to claim 1 or 2,
**characterised in that**
the contact line system (1) has at least one disconnecting device (15), which is arranged between the discharging device and ground potential, as a result of which the discharging device (4) is constructed to be capable of being electrically disconnected from ground potential.

4. Contact line system (1) according to claim 3,
**characterised in that**
the disconnecting device (15) is constructed to disconnect the discharging device (4) from ground potential automatically, once a short circuit has lasted for a predetermined period.

5. Contact line system (1) according to one of the preceding claims,
**characterised in that**
the contact line system (1) has at least one isolating device (14) that is arranged between the discharging device (4) and ground potential and isolates the discharging device (4).

## Revendications

1. Installation (1) à caténaire d'une ligne (8) de chemin de fer,
comprenant au moins une caténaire (2) pour l'alimentation en énergie électrique d'au moins un véhicule, comprenant au moins un ouvrage ayant au moins une partie (5) transformée, dans laquelle il faut maintenir une distance de décharge électrique en fonction d'une surtension maximum à escompter par rapport au au moins un ouvrage, dans laquelle passe la caténaire (2) et la ligne (8) de chemin de fer, et
comprenant au moins deux dispositifs (4) de décharge, qui sont connectés d'une part à la au moins une caténaire (2) de l'installation (1) à caténaire et d'autre part à un potentiel de terre,
**caractérisée en ce que**
les au moins deux dispositifs (4) de décharge sont disposés, par rapport à la au moins une partie (5) transformée du au moins un ouvrage, de manière à ce qu'une partie (18), protégée, constituée par les au moins deux dispositifs (4) de décharge de la au moins une caténaire (2), recouvre la une partie (5) transformée, dans laquelle les au moins deux dispositifs (4) de décharge, qui réduisent, dans la au moins une partie (5) transformée du au moins un ouvrage, la surtension à escompter au maximum et la distance de décharge électrique dans la partie (18) protégée à maintenir par rapport au au moins un ouvrage, en fonction de la surtension escomptée au maximum, à une distance de décharge électrique en-dessous de la décharge électrique à maintenir par rapport au au moins un ouvrage sans les au moins deux dispositifs (4) de décharge, dans laquelle, devant et derrière la au moins une partie (5) transformée, est disposé respectivement l'un des au moins deux dispositifs (4) de décharge et dans laquelle la au moins une caténaire (2) de l'installation (1) à caténaire est constituée dans la partie entre les dispositifs (4) de décharge, de manière à ce que l'impédance caractéristique soit sensiblement constante.

2. Installation (1) à caténaire suivant la revendication **1, caractérisée en ce que**
le dispositif (4) de décharge est constitué de manière à ce que son niveau de protection soit plus petit qu'une tension de choc de mesure et plus grand que les limites admissibles d'une tension nominale de l'installation (1) à caténaire.

3. Installation (1) à caténaire suivant la revendication 1 ou 2,
**caractérisée en ce que**
l'installation (1) à caténaire a au moins un dispositif (15) de séparation, qui est monté entre le dispositif de décharge et le potentiel de terre et par lequel le dispositif (4) de décharge est constitué de manière à pouvoir être séparé électriquement du potentiel de terre.

4. Installation (1) à caténaire suivant la revendication 3,
**caractérisée en ce que**
le dispositif (15) de séparation est constitué pour la séparation automatique du dispositif (4) de décharge du potentiel de terre après une durée de court-circuit déterminée à l'avance.

5. Installation (1) à caténaire suivant l'une des revendications mentionnées ci-dessus,
**caractérisée en ce que**
l'installation (1) à caténaire a au moins un dispositif (14) à isolateur disposé entre le dispositif (4) de décharge et le potentiel de terre et isolant le dispositif (4) de décharge.
